# EUROPEAN PATENT SPECIFICATION

(11) **EP 1 241 656 B1**
(45) Date of publication and mention of the grant of the patent: **16.09.2009**
(21) Application number: 02290583.0
(22) Date of filing: 08.03.2002
(51) Int. Cl.: G09G 5/00, G09G 3/20, G09G 3/36, H04N 3/12

(54) **Frame rate multiplier for liquid crystal display**
Schaltung zur Multiplikation der Bildfrequenz in einer Flüssigkristallanzeige
Circuit de multiplication de la fréquence de trame pour afficheur à cristaux liquides

(30) Priority: 12.03.2001 US 804554
(43) Date of publication of application: 18.09.2002
(73) Proprietor: Thomson Licensing, 92100 Boulogne-Billancourt (FR)
(72) Inventor: Willis, Donald Henry, Indianapolis, IN 46250 (US)
(74) Representative: Ruellan-Lemonnier, Brigitte

(56) References cited:
- GB-A- 2 159 656
- US-A- 6 091 386

## Description

### Background of the Invention

### 1. Field of the Invention

The invention arrangements relate to the field of LCOS (liquid crystal on silicon) and/or LCD (liquid crystal display) video display systems, both reflective and transmissive.

### 2. Description of Related Art

Liquid crystal on silicon (LCOS) can be thought of as one large liquid crystal formed on a silicon wafer. The silicon wafer is divided into an incremental array of tiny plate electrodes. A tiny incremental region of the liquid crystal is influenced by the electric field generated by each tiny plate and the common plate. Each such tiny plate and corresponding liquid crystal region are together referred to as a cell of the imager. Each cell corresponds to an individually controllable pixel. A common plate electrode is disposed on the other side of the liquid crystal. Each cell, or pixel, remains lighted with the same intensity until the input signal is changed, thus acting as a sample and hold. The pixel does not decay, as is the case with the phosphors in a cathode ray tube. Each set of common and variable plate electrodes forms an imager. One imager is provided for each color, in this case, one imager each for red, green and blue.

It is typical to drive the imager of an LCOS display with a frame-doubled signal to avoid 30 Hz flicker, by sending first a normal frame (positive picture) and then an inverted frame (negative picture) in response to a given input picture. The generation of positive and negative pictures ensures that each pixel will be written with a positive electric field followed by a negative electric field. The resulting drive field has a zero DC component, which is necessary to avoid the image sticking, and ultimately, permanent degradation of the imager. It has been determined that the human eye responds to the average value of the brightness of the pixels produced by these positive and negative pictures.

The drive voltages are supplied to plate electrodes on each side of the LCOS array. In the presently preferred LCOS system to which the inventive arrangements pertain, the common plate is always at a potential of about 8 volts. This voltage can be adjustable. Each of the other plates in the array of tiny plates is operated in two voltage ranges. For positive pictures, the voltage varies between 0 volts and 8 volts. For negative pictures the voltage varies between 8 volts and 16 volts.

The light supplied to the imager, and therefore supplied to each cell of the imager, is field polarized. Each liquid crystal cell rotates the polarization of the input light responsive to the root mean square (RMS) value of the electric field applied to the cell by the plate electrodes. Generally speaking, the cells are not responsive to the polarity (positive or negative) of the applied electric field. Rather, the brightness of each pixel's cell is generally only a function of the rotation of the polarization of the light incident on the cell. As a practical matter, however, it has been found that the brightness can vary somewhat between the positive and negative field polarities for the same polarization rotation of the light. Such variation of the brightness can cause an undesirable flicker in the displayed picture.

In this embodiment, in the case of either positive or negative pictures, as the field driving the cells approaches a zero electric field strength, corresponding to 8 volts, the closer each cell comes to white, corresponding to a full on condition. Other systems are possible, for example where the common voltage is set to 0 volts. It will be appreciated that the inventive arrangements taught herein are applicable to all such positive and negative field LCOS imager driving systems.

Pictures are defined as positive pictures when the variable voltage applied to the tiny plate electrodes is less than the voltage applied to the common plate electrode, because the higher the tiny plate electrode voltage, the brighter the pixels. Conversely, pictures are defined as negative pictures when the variable voltage applied to the tiny plate electrodes is greater than the voltage applied to the common plate electrode, because the higher the tiny plate electrode voltage, the darker the pixels. The designations of pictures as positive or negative should not be confused with terms used to distinguish field types in interlaced video formats.

The present state of the art in LCOS requires the adjustment of the common-mode electrode voltage, denoted VITO, to be precisely between the positive and negative field drive for the LCOS. The subscript ITO refers to the material indium tin oxide. The average balance is necessary in order to minimize flicker, as well as to prevent a phenomenon known as image sticking.

In the following description, the term fHin is used herein to denote the horizontal scanning frequency of an input video signal. The term f_{V}in is used to denote the vertical scanning frequency of an input video signal. In the standard definition interlaced NTSC system, f_{H}in might be 15,750 Hz (1f_{H}) or 31,500 Hz (2f_{H}). Typically, f_{V}in is 60 Hz for NTSC and 50 Hz for PAL. High definition formats have been defined by the ATSC. The term 480p refers to a video signal having 480 lines of video in each progressive (non-interlaced) frame. A 720p video signal has 720 lines of video in each frame. The term 1080i refers to a video signal having 1,080 interlaced horizontal lines in top and bottom fields, each field having 540 horizontal lines. In accordance with this convention, the term 720i would denote 720 lines of interlaced video per frame and the term 1080p would denote 1,080 lines of progressive horizontal lines in each frame. Typically, such high definition systems have an fHin ≥ 2f_{H}.

The letter n is used herein to denote a multiple of fHin or f_{V}in. Assume, for example, that a 480p input video signal is speeded up by the multiple n = 2. Since fHin = 2f_{H} the horizontal scanning frequency is doubled to 4f_{H}. Assume, for example, that the same 480p input video signal is subjected to a 1/n-frame delay, also where n = 2. Since the 480p input video signal has an f_{V}in = 60 Hz, the delay is 1/120 second. The multiple n need not be an integer. If f_{H}in = 2.14f_{H}, and n = 2, the video signal is speeded up to 4.28f_{H}. A 720p video signal, for example, has fHin = 3f_{H}. If fHin = 3f_{H} and n = 2, the video signal is speeded up to 6f_{H}.

In order to avoid visible flicker, it is common practice to use a higher vertical scanning frequency, or frame rate, to suppress flicker. In an NTSC system, for example, if n = 2 a frame rate of 60 Hz is doubled to a frame rate of 120 Hz. In a PAL system, a field rate of 50 Hz is doubled to a field rate of 100 Hz. However, the higher frame rate or field rate makes adjustment of the common mode electrode voltage more difficult because the flicker is not visible to the human eye. An operator can not make the necessary adjustments without special instruments.

Faster frame rates have required frame rate doublers, that is, a circuit that can cause each picture to be scanned twice within each frame period of the incoming video signal. A 60 Hz frame rate has a frame period of ¹/₆₀ second. Doubling a frame rate of 60 Hz requires scanning at 120 Hz. A 120 Hz frame rate has a frame period of ¹/₁₂₀ second. If an incoming video signal has a horizontal scanning frequency of 2f_{H} , where f_{H} is for example a standard NTSC horizontal scanning rate, and a standard frame rate of 60 Hz, the pictures must be displayed at 4f_{H} and 120 Hz. In other words, each picture must be displayed twice during each 60 Hz frame period, that is, in every 1/60 second. Each line must be written to the display at 4f_{H}.

In accordance with the prior art, frame rate doublers utilize two full frame memories in a so-called ping-pong arrangement. A frame is written into one memory as another frame is read out of the other memory, and vice versa, in an alternating manner. This technique always incurs a full frame period of video delay because neither of the ping-pong frame memories can be read out until a full frame has been written in. Accordingly, the audio signal must be delayed to match the video delay. It was known that the memory requirements could be reduced to one full frame memory by proper utilization of the memory in a correctly implemented video speedup arrangement. However, for any frame multiplication greater than doubling, the alternative use of one full frame memory is not workable. Two full frame memories are always required in such a situation.

Also in the prior art, patent publication GB 2 159 656 A teaches a method of driving a matrix-type liquid crystal display panel. The method comprises the steps of: division of a scan pulse H delivered to plurality of row electrodes into plural scan periods, the supply of current video signal data during the first divided period during respective scan periods, and the supply of further data during the rest of the scan periods. Further, dividing the width of the width of the scan pulse into n-th, the frame frequency can be raised n-times, thus making it possible to achieve a satisfactory liquid crystal picture display without flicker. Still further, the reference teaches that current video data is supplied to the upper half portion of the panel while scanning is performed during the first scan periods to rows 1 to i. Stored data from a 1/2 frame memory is supplied to the lower half of the panel during the remainder of the scan periods. The situation is reversed during scanning of the next field.

### Summary of the Invention

The problems of the prior art in implementing frame rate doublers, and more generally in providing frame rate multipliers, are overcome in accordance with the inventive arrangements. The solutions provided by the inventive arrangements are particularly appropriate for liquid crystal displays, for example LCOS. Moreover, the savings in memory requirements in accordance with certain embodiments enable more of the frame rate multiplier to be integrated.

A frame rate multiplier in accordance with the inventive arrangements can be implemented by writing the incoming video signal directly to the display, for example an LCOS display, as well as to a frame rate multiplier memory. In the case of a frame rate doubler, for example, this advantageously allows a one-half frame memory to be used instead of a full frame memory, and advantageously reduces the memory bandwidth required. The memory size reduction is very important, because a half-frame memory can be embedded on an integrated circuit providing other functions, whereas a full frame memory is too large, or at least, too expensive to embed. Moreover, it is advantageously not necessary to delay the audio to match the frame rate multiplied video, as in the ping-pong memory arrangement. Speedup memories, for example line memories, can be used to speed up the signals at the input to the display, allowing an LCOS display to be used, for example an LCOS display operating at 4f_{H}.

The smaller memory bandwidth is a sufficient reduction to simultaneously write to and read from the half-frame memory with the same bandwidth as the incoming signal. The bandwidth in this embodiment of the invention is about ²/₃ of the bandwidth needed for the ping-pong arrangement. In an alternative embodiment, the speedup memory following the half-frame delay can be omitted if the half-frame memory can be read intermittently, twice as fast as the half-frame memory is written. In other words, the half-frame memory is also used as a speedup memory. This embodiment requires one less speedup memory, but there is no reduction in the memory bandwidth, as the half-frame memory must be read at a faster rate (e.g., 4f_{H}) than the rate of the incoming video signal (e.g., 2f_{H}). The half-frame memory and both of the speed up memories can also be combined into a single memory.

It should be noted that the only special characteristic needed by the display is to have a direct row address select capability for writing any row selected, as opposed to only being writable strictly sequentially. In the frame rate doubler embodiment, successively written rows, or lines, are separated by half of the picture height. More specifically, for example, the line, or row, writing sequence for a 480p display can be 1, 241, 2, 242, and so on.

The frame rate multiplier can advantageously be implemented together with a number of different schemes for reversing the polarities of the fields driving the LCOS display as required. Moreover, the frame rate multiplier operates in such a way that the flicker due to the difference in brightness between the positive and negative fields is advantageously not perceptible.

### Brief Description of the Drawings

Figure 1 is a block diagram of a frame rate multiplier in accordance with the inventive arrangements and adapted for operation as a frame rate doubler.

Figure 2(a) is a Table useful for explaining the operation of the frame rate doubler shown in Figure 1 in accordance with a first embodiment.

Figure 2(b) is a Table useful for explaining the operation of the frame rate doubler shown in Figure 1 in accordance with a second embodiment.

Figure 3 is a Table useful for summarizing the operation of the frame rate doubler represented by the table in Figure 2.

Figures 4(a)-4(g) are useful for explaining a first scheme for controlling field polarity.

Figures 5(a)-5(g) are useful for explaining a second scheme for controlling field polarity.

Figure 6 is a block diagram of an alternative embodiment of a frame rate multiplier in accordance with the inventive arrangements and adapted for operation as a frame rate doubler.

Figure 7 is a block diagram of another alternative embodiment of a frame rate multiplier in accordance with the inventive arrangements and adapted for operation as a frame rate doubler.

Figure 8 is a block diagram of yet another alternative embodiment of a frame rate multiplier in accordance with the inventive arrangements.

Figures 9(a)-9(c) are Tables useful for explaining the operation of the frame rate multipliers shown in Figures 7 and 8.

### Detailed Description of the Preferred Embodiments

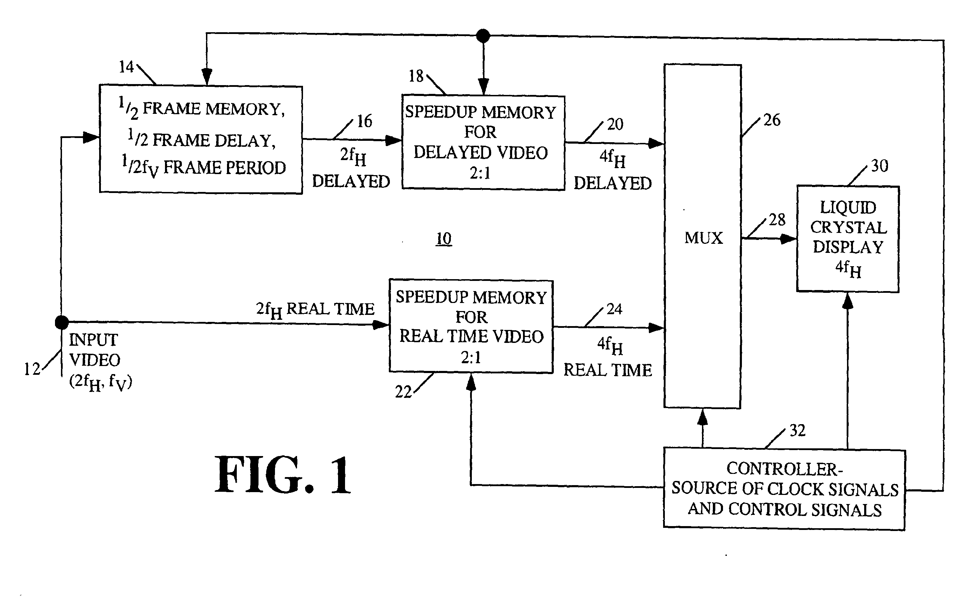

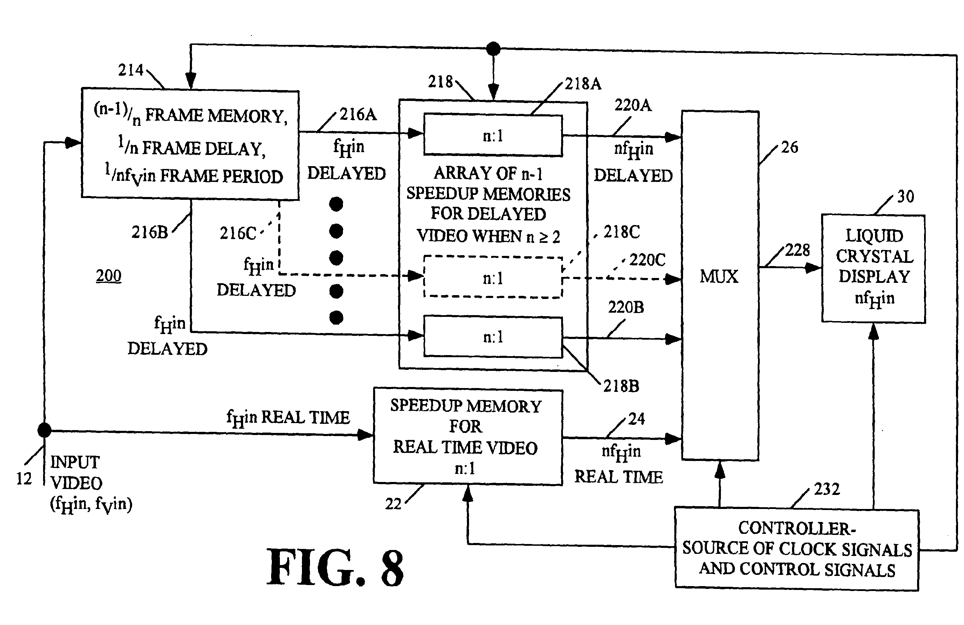

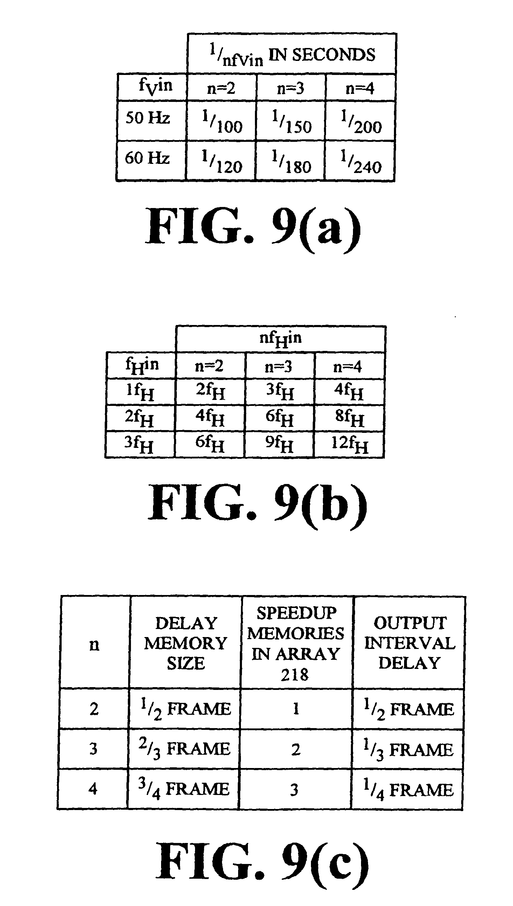

A frame rate multiplier 10 in accordance with the inventive arrangements is shown block diagram form in Figure 1. The frame rate multiplier is embodied as a frame rate doubler in order to simplify the description. A frame rate multiplier for the general case of multiplying the frame rate by n, where n ≥ 2, is explained later in connection with Figures 8 and 9(a)-9(c). An input video signal 12 has a horizontal scanning frequency of f_{H}in = 2f_{H} and a vertical scanning frequency f_{V}in = f_{V}. It will be assumed for purposes of illustration that input video signal 12 is in 480p format.

Input video signal 12 is an input to a partial frame memory 14. The partial frame memory is used to delay the video signal in time by ¹/₂ of a frame period. If f_{V} = 60 Hz, the temporal frame delay is ¹/_{fV} = ¹/₁₂₀ second.

The output signal 16 from the partial frame memory is at 2f_{H} and is delayed in time. The delayed video signal is speeded up by a 2:1 speedup memory 18. The output signal 20 of speedup memory 18 is both delayed and speeded up. The delayed and speeded up video signal 20 is an input to a multiplexer (MUX) 26.

The input video signal 12 is also an input to a 2:1 speedup memory 22. The speeded up output signal 24 is a second input to multiplexer 26. The memories 18 and 22 can be distinguished for reference as a memory for delayed video and a memory for real time video respectively. The output signals 20 and 24 can be distinguished for reference as 4f_{H} delayed and 4f_{H} real time respectively.

The multiplexer 26 has an output 28 coupled to a liquid crystal display (LCD) 30 that operates at 4f_{H}. The LCD in the presently preferred embodiment is a liquid crystal on silicon (LCOS) as described earlier. The LCD 30 is capable of random row access control, that is, successive lines of video need not be written into successive rows of the LCD matrix sequentially. Moreover, in such liquid crystal displays, each cell, or pixel, remains lighted with the same intensity until the input signal is changed, thus acting as a sample and hold. The pixel does not decay.

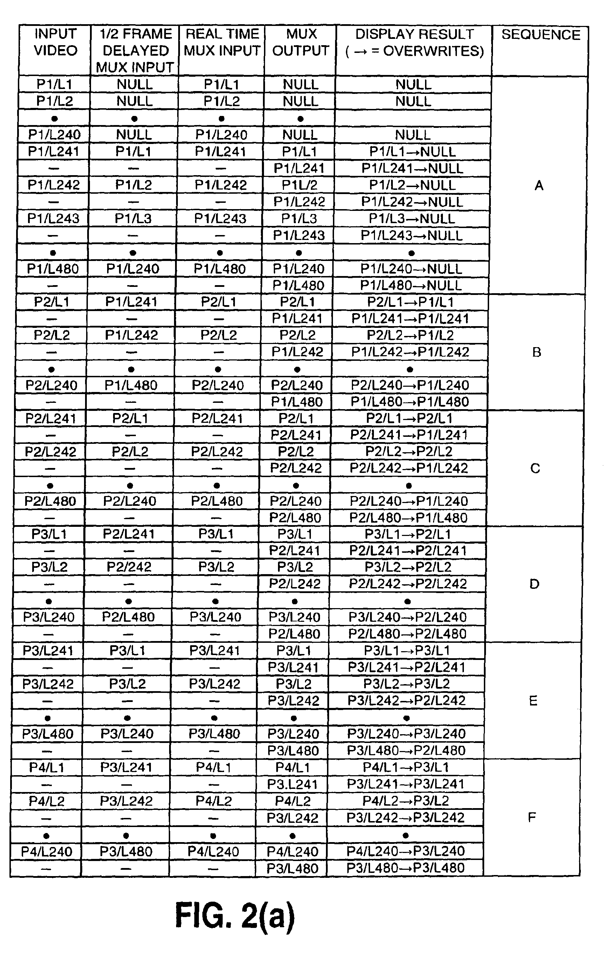

A controller 32 is a source of clock signals and control signals for the operation of the partial frame memory 14, the speedup memories 18 and 22, the multiplexer 26 and the liquid crystal display. The operation of controller 32 is constrained to provide, for example, the operating characteristics and results illustrated by the Tables in Figures 2(a), 2(b), 3, 4(a)-4g) and 5(a)-5(g).

Each real time line and each delayed line supplied to the liquid crystal display must be available as an input to the multiplexer, which is the same as being available as a speeded up video line, within ¹/₂ of the frame period of the input video signal, to use a frame rate doubler as an example. However, it is not a problem if the video lines are available before ¹/₂ of the frame period has passed. Accordingly, it is not strictly necessary that the speedup factor of the real time video and the delayed video be limited to 2:1. The speedup factor can be faster if that proves convenient in the circuit design for other reasons. Moreover, it is not strictly necessary that the speedup factors for the real time video and the delayed video be the same as one another, as long as each is fast enough.

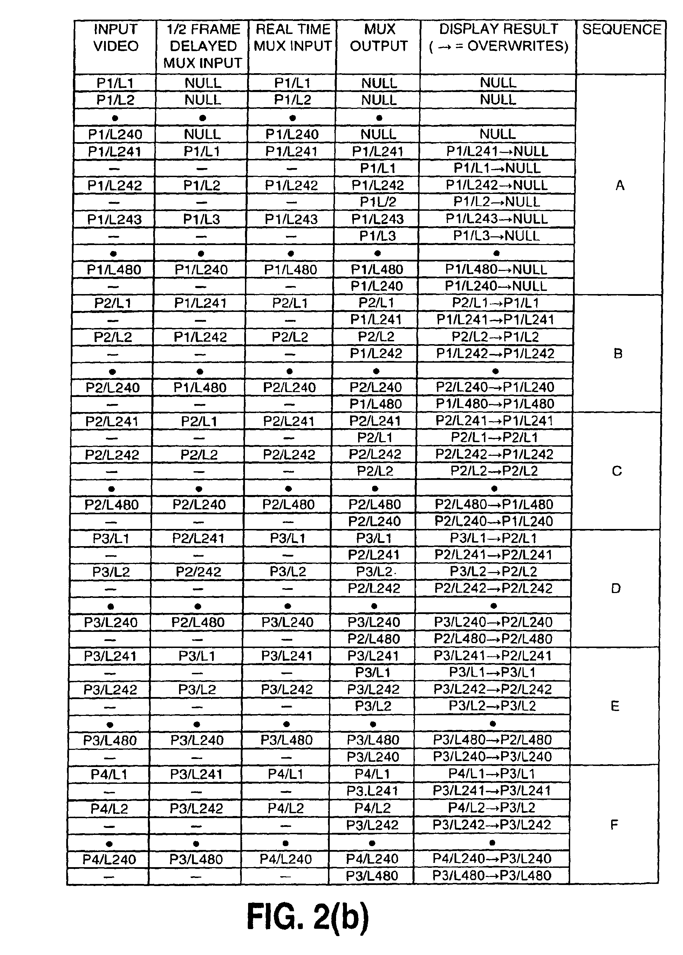

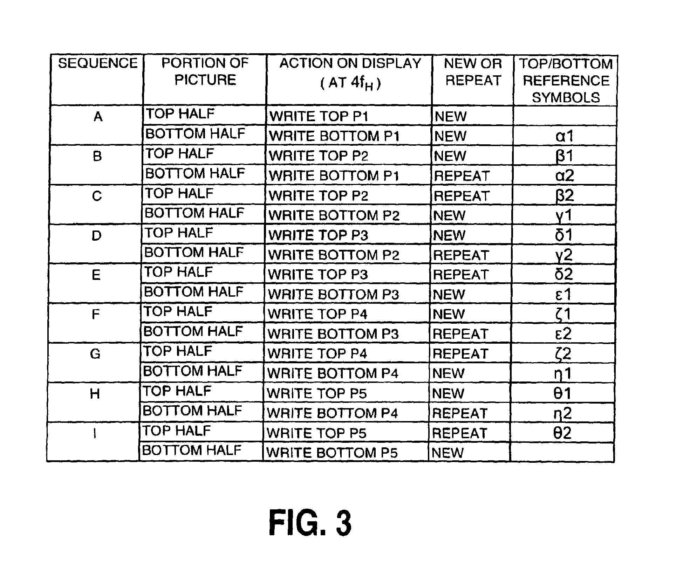

The Tables in Figures 2(a) and 2(b) illustrate two different modes of operation of the circuit 10. Figure 3 is a summary of operation at a higher level that is appropriate for both Figures 2(a) and 2(b). As in Figure 1, it is assumed that memory 14 is a ¹/₂ frame memory, and the frame delay is ¹/₂ of a frame period. The video speedup provided by each of memories 18 and 22 is 2:1. The input is a 480p 2f_{H} signal. The speeded up video is at 4f_{H} and the LCD 30 operates at 4f_{H}. The 480p signal has f_{V} = 60 Hz. The ¹/₂ frame delay in memory 14 is ¹/₁₂₀ second.

With reference to Figure 2(a), the first column represents a picture number and line number of a 480p input video signal. The row 1 entry "P1/L1" denotes picture 1, line 1. The row 4 entry denotes picture 1, line 240. The second column represents the picture and line number of the 2f_{H} Delayed input signal 20 to the multiplexer 26. The third column represents the picture and line number of the 2f_{H} Real Time input signal 24 to the multiplexer 26. The fourth column represents the output of the multiplexer 26. The fifth column represents the result of writing the selected output of the multiplexer 26 into the LCD 30. The sixth column is a Sequence designation useful for reference in Figure 2(a) and keyed to Figures 3, Figures 4(b)-4(g) and Figures 5(b)-5(g). Using the Sequence designation as a reference, in the first row of Sequence B the first line of the second picture overwrites, that is replaces, the first line of the first picture.

With reference to Sequence A and Figure 1, assume that line 1 of picture 1 in the input video signal propagates through speedup memory 22. At the same time, line 1 of picture 1 will propagate though the delay frame memory 14. As successive lines are received, line 241 will eventually be available to be read as the input signal 24 to the multiplexer. By that time, line 1 will have propagated through delay memory 14 and speedup memory 18, and be available to be read as the input signal 20 to the multiplexer. Then, line 1 can be selected for an output of the multiplexer for writing into line 1 of the LCD 30. Next, line 241 can be selected for an output of the multiplexer for writing into line 241 of the LCD 30. By the time lines 1 and 241 have been written, lines 2 and 242 will be available to be read as the inputs to the multiplexer. Line 2 is written, followed by line 242; line 3 is written, followed by line 243, and so on. The picture is written in top and bottom halves simultaneously. The spatial separation of the lines being written to the display is ¹/₂ of the picture height. In other words, the separation of successively written lines of each pair of inputs available to the multiplexer is one-half of the picture height. It is of course possible for the LCD display to have more rows and/or columns of pixels than are needed to display the video signal.

The sequence described above is more fully illustrated in Figure 2 (a). Rows with large dots (• • • • •) denote rows skipped to conserve space. Rows with dashes (- - -) denote that a place is being held in the time sequence to permit both input signals to the multiplexer to be sequentially selected and written.

Sequence A described how the first picture was written into the display 30. Sequences B-F illustrate how the frame doubling is actually accomplished. At the beginning of Sequence B, as shown in the first row of Sequence B, the second picture is beginning as an input to the frame rate multiplier. Picture 2, line 1 is the Real Time input to the multiplexer and picture 1, line 241 has propagated through memory 14 and is now the Delayed input to the multiplexer. As sequence B proceeds, the top half of picture 1 is replaced by the top half of picture 2 and the bottom half of picture 1 is replaced by the bottom half of picture 1.

At the beginning of Sequence C, as shown in the first row of Sequence C, the bottom half of the second picture is beginning as an input to the frame rate multiplier. Picture 2, line 241 is the Real Time input to the multiplexer and picture 2, line 1 has propagated through memory 14 and is now the Delayed input to the multiplexer. As sequence C proceeds, the top half of picture 2 is replaced by the top half of picture 2 and the bottom half of picture 1 is replaced by the bottom half of picture 2.

At the beginning of Sequence D, as shown in the first row of Sequence D, the top half of the third picture is beginning as an input to the frame rate multiplier. Picture 3, line 1 is the Real Time input to the multiplexer and picture 2, line 241 has propagated through memory 14 and is now the Delayed input to the multiplexer. As sequence D proceeds, the top half of picture 2 is replaced by the top half of picture 3 and the bottom half of picture 2 is replaced by the bottom half of picture 2.

Sequences E and F follow the pattern of Sequences B, C and D. The pattern of writing top and bottom halves of successive pictures is summarized in Figure 3. The column entitled New or Repeat indicates whether a given top or bottom half has been written for the first time or the second time. The right hand column are Greek letters followed by numbers that link the writing of top and bottom halves of pictures in successive sequences. It should be noted again that each sequence requires 1/2 of the frame period to complete. Accordingly, every successive pair of sequences (e.g., BC, CD, DE, etc.) requires one full frame period to complete.

As a first example, α1 denotes the first time that the bottom half of picture 1 is written to the display. β1 denotes the first time that the top half of picture 2 is written to the display. α2 denotes the second time that the bottom half of picture 2 is written to the display. β2 denotes the second time that the top half of picture 2 is written to the display.

As a second example, consider the sequence beginning with η1. η1 denotes the first time that the bottom half of picture 4 is written to the display. θ1 denotes the first time that the top half of picture 5 is written to the display. η2 denotes the second time that the bottom half of picture 4 is written to the display. θ2 denotes the second time that the top half of picture 5 is written to the display.

In each example, two top picture halves and two bottom picture halves have been written into the liquid crystal display in one frame period. The frame rate has thus been multiplied by 2.

It must be remembered that the average DC level of the positive and negative polarity fields is desirably 0. At the line or row level of the display, each row is desirably driven at a 50% duty cycle with regard to field polarity. It appears that the Delayed and Real Time inputs to the multiplexer are always alternately selected as outputs. This is generally true of the inventive arrangements, and strictly true in the embodiment shown in Figure 2(b), but not strictly the case in the embodiment of Figure 2(a). In fact, this is the only difference between the embodiments represented by Figures 2(a) and 2(b), and a row by row description of Figure 2(b) as with Figure 2(a) is unnecessary. Indeed, the summary of Figure 3 applies to both embodiments.

It can be seen in Figure 2(a) that the first row output from the multiplexer in each of the sequences is the first line of a given picture, that is, P1/L1, P2/L1, P2/L1, P3/L1,P3/L1, etc. At the beginning of Sequence B, the first output of the multiplexer is the Real Time input P2/L1. At the beginning of Sequence C, the first output of the multiplexer is the Delayed input P2/L1. But, the last output of Sequence B, namely P1/L480, was also the Delayed output. Accordingly, the alternating selection of inputs for the multiplexer is periodically interrupted in order to maintain the desirable 50% duty cycle.

It can be seen in Figure 2(b) that the first row output from the multiplexer in each of the sequences is not the first line of a given picture, that is, P1/L241, P2/L1, P2/L241, P3/L1, P3/L241, etc. If the multiplexer selection always alternates, as in Figure 2(b), the following sequence of writing lines will occur for two successive pictures: 1, 241, 2, 242, 3, 243, . . . 238, 478, 239, 479, 240, 480, 241, 1, 242, 2, 243, 3, . . . 478, 238, 479, 239, 480, 240, 1, 241, etc. In the first part of the sequence with the single underline, there are 480 lines written before line 1 is written again. In the second part of the sequence with the double underline there are 479 lines written before line 1 is written again. This represents a small deviation from a 50% duty cycle.

The embodiment of Figure 2(a) achieves the 50% duty cycle but requires a more complex operation of the multiplexer. The embodiment of Figure 2(b) departs somewhat from the 50% duty cycle, but if the liquid crystal display can tolerate the deviation, the operation of the frame rate multiplier is less complex.

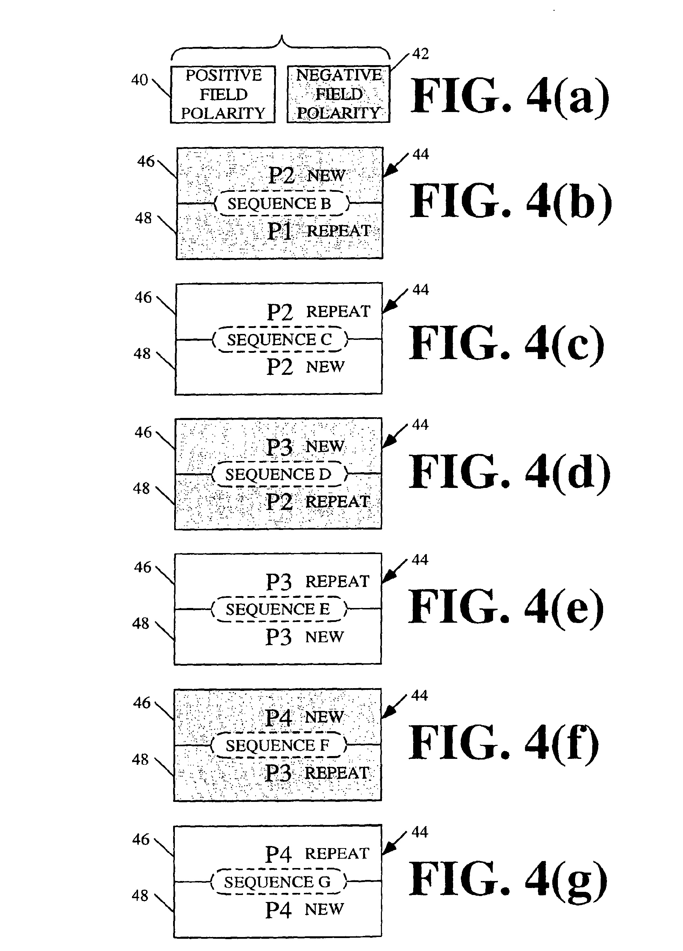

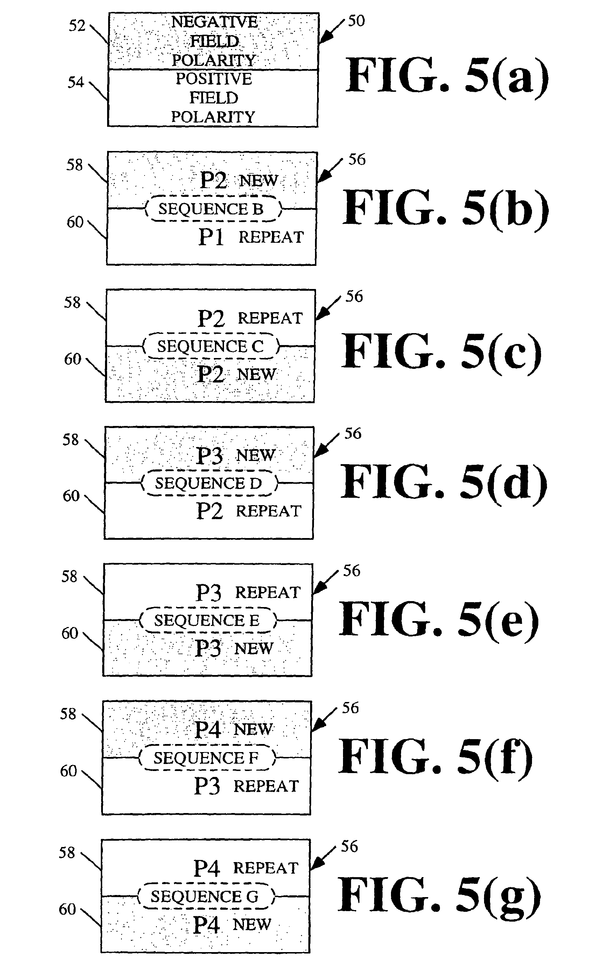

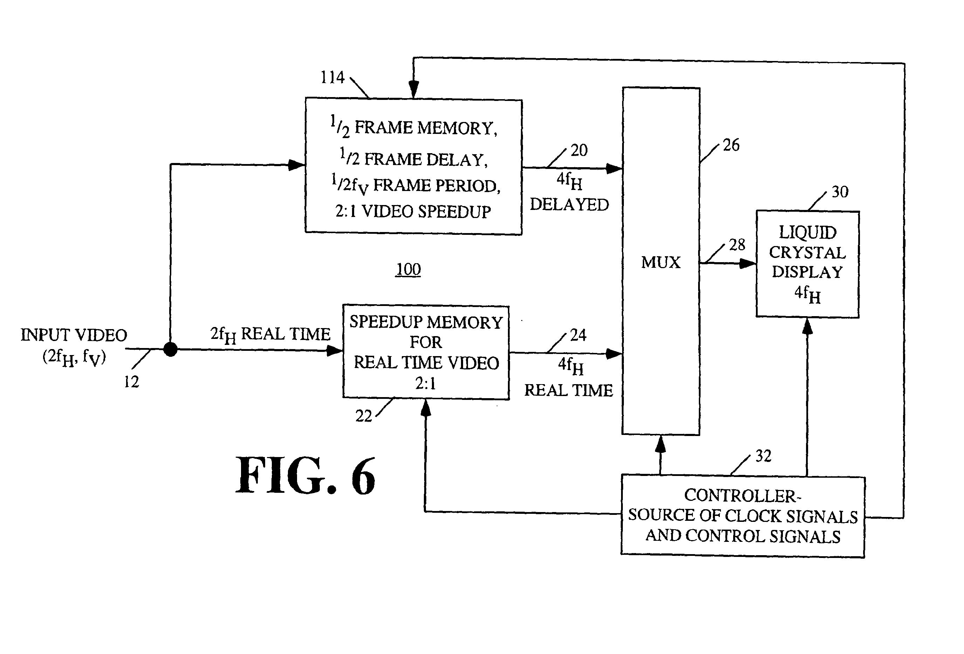

Electrical field polarity can be managed in accordance with the inventive arrangements. A first scheme for managing field polarity is shown in Figures 4(a)-(g). A second scheme for managing field polarity is shown in Figures 5(a)-(g). Each of these representative schemes can be used with the embodiment of Figure 1, operated in accordance with Figure 2(a) or 2(b), as well as the further embodiments shown in Figures 6, 7 and 8.

Figure 4 (a) is a key for understanding Figures 4 (b) -(g). A white background 40 represents a liquid crystal display with a positive field polarity and a gray background 42 represents a liquid crystal display with a negative field polarity. A liquid crystal display 44 in Figure 4(b) has a top half 46 and a bottom half 48. During Sequence B, for example, the display 44 is driven by a negative polarity field in each of the top and bottom halves. The driving field polarity reverses to positive at the beginning of Sequence C as shown in Figure 4(c). The driving field polarity reverses to negative at the beginning of Sequence D as shown in Figure 4(d). The driving field polarity reverses to positive at the beginning of Sequence E as shown in Figure 4(e). The field polarity continues to alternate as shown in Figures 4(f) and 4(g). This embodiment can be implemented, for example, by changing the driving field polarity every time the multiplexer supplies the number of lines constituting a full picture height, in this example, every 480 lines. In other words, before writing the first line of each sequence.

Figure 5(a) is a key for understanding Figures 5(b) -(g). A liquid crystal display 50 has a top half 52 and a bottom half 54. One of the top and bottom halves is always written with a positive electric field while the other one of the top and bottom halves is always written with a negative electric field. Further, each of the top and bottom halves is successively and completely written with alternating polarity electric fields. A white background represents a liquid crystal display with a positive field polarity and a gray background represents a liquid crystal display with a negative field polarity. A liquid crystal display 56 in Figure 5(b) has a top half 58 and a bottom half 60. During Sequence B, for example, the display 56 is driven by a negative polarity field in the top half 58 and a positive polarity field in the bottom half 60. The driving field polarity for each of the top and bottom halves reverses at the beginning of Sequence C as shown in Figure 5(c). The driving field polarity for each of the top and bottom halves reverses again at the beginning of Sequence D as shown in Figure 5(d). The driving field polarity for each of the top and bottom halves continues to reverse as shown in Figures 5(e), 5(f) and 5(g). This scheme requires that the driving field polarity for each line reverses with each output line of the multiplexer.

Figure 6 illustrates an alternative embodiment. Frame rate multiplier 100, embodied as a frame rate doubler, is identical to the frame rate multiplier 10 in Figure 1 except that the partial frame 14 and the speedup memory 18 are replaced by a single frame memory 114. Memory 114 provides both the partial frame delay and the video speedup. This embodiment requires one less speedup memory, but there is no reduction in the memory bandwidth, as the half-frame memory must be read a faster rate (e.g., 4f_{H}) than the rate of the incoming video signal (e.g., 2f_{H}). In all other respects, the operation of this embodiment is the same as that shown in Figure 1. The embodiment of Figure 6 can be operated, for example, as explained in Figures 2(a), 2(b), 3, 4(a)-(g) and 5(a)-(g).

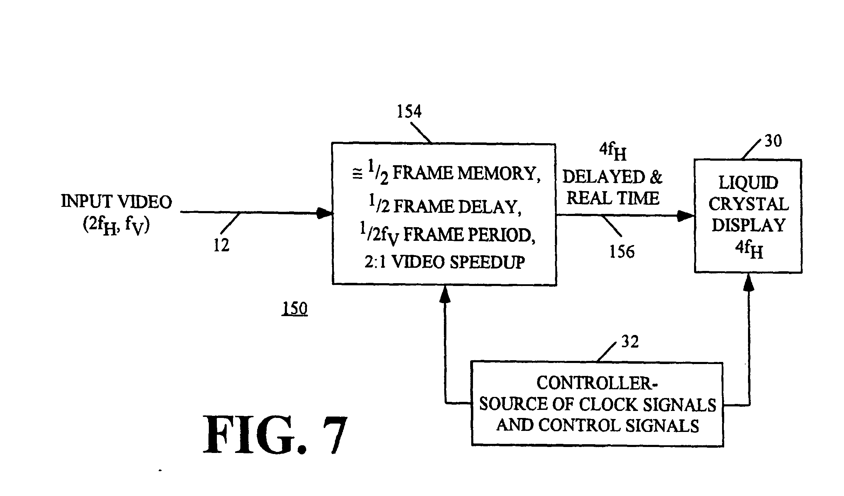

Figure 7 illustrates another alternative embodiment. Frame rate multiplier 150, embodied as a frame rate doubler, is identical to the frame rate multiplier 10 in Figure 1 except that the partial frame memory 14, the speedup memory 18 and the speedup memory 22 are replaced by a single memory 154. Memory 154 provides both the partial frame delay and the video speedup for both the delayed and real time versions of the input video signal 12. It is necessary that the read port be selectively addressable in order that real time video lines and the delayed video lines can be read alternately, speeded up and then supplied to the liquid crystal display in accordance with the methods taught herein. All of the data manipulations result from controlling the read port of the memory 154, which is reflected in the corresponding operation of the controller 32. This embodiment requires only one memory that functions as both of the speedup memories and the delay memory. As in the embodiment of Figure 6, there is no reduction in the memory bandwidth, as the half-frame memory must be read a faster rate (e.g., 4f_{H}) than the rate of the incoming video signal (e.g., 2f_{H}). Moreover, it is expected that the half-frame memory must be somewhat larger than one-half of a frame, for example in the range of one-half of a line to several lines, particularly to operate in accordance with the embodiment represented by Figure 2(a). Accordingly, the size of half-frame memory 154 is approximately (≅) one-half of a frame. With regard to the advantage of embodying the memory in an integrated circuit, the extra lines needed are of no practical consequence. In this respect, the memory 154 is still fairly referred to in general as a half-frame memory. In all other respects, the operation of this embodiment is the same as that shown in Figure 1. The embodiment of Figure 6 can be operated, for example, as explained in Figures 2(a), 2(b), 3, 4(a)-(g) and 5(a)-(g).

Frame rate multiplier 200 shown in Figure 8 illustrates how the frame rate multiplier is adapted for operation when n > 2. A partial frame memory 214 has multiple output taps 216A, 216B, 216C, etc., providing equal delays. An array 218 of n-1 speedup memories includes speedup memories 218A, 218B, 218C, etc. An n:1 speedup memory is provided for each delayed output of memory 214. Each speedup memory provides an output 220A, 220B, 220C, etc., which is a selectable input for the multiplexer 226. The operation of the Real Time speedup memory 22,with output 24 is the same. There are n - 1 speedup memories in the array 218, and there are n speedup memories in the circuit 200. Whether or not the Real Time speedup memory is or is not considered a part of the array 218 is a matter of convenience.

The operation of the liquid crystal display is altered insofar as the picture will be written into the display as n parts. If n = 3, for example, the picture will be divided into and processed as top, middle and bottom thirds. Each third would have 160 lines. The output taps of the frame memory would be timed for ¹/₃ of frame period and ²/₃ of a frame period. The writing sequence by line for n = 3 for a 480p video signal can be, for example, 1, 161, 321, 2, 162, 322, 3, 163, 323, etc. If n = 4, for example, the picture will be divided into and processed as top, upper middle, lower middle and bottom fourths. Each fourth would have 120 lines. The output taps of the frame memory would be timed for ¹/₄ of frame period, ¹/₂ of frame period and ³/₄ of a frame period. The writing sequence by line for n = 4 for a 480p video signal can be, for example, 1, 121, 241, 361, 2, 122, 242, 362, 3, 123, 243, 363, etc. The further detailed operation of this embodiment is very tedious to illustrate and explain as was done in Figures 2(a), 2(b) and 3. However, those skilled in the art will encounter no difficulties in scaling up the size and capacity of the frame rate multiplier 200 based upon the teachings of the preceding embodiments. It can be noted, for example, that when n = 3 the size of the delay memory must be ²/₃ of a frame memory. When n = 4 the size of the delay memory must be ³/₄ of a frame memory. Therefore, the trade-off for higher frame multiplication rates is the need for a larger frame memory, as well as a more complex set of clock and control signals generated by controller 232. In view of the foregoing teachings, it can be understood by one skilled in the art that under some circumstances, for example when 1 < n < 2, not all of the lines of each picture will be written more than once. It should be noted that all of the operations implemented by frame rate multiplier 200 can be implemented by a frame rate multiplier with a single memory as shown in Figure 7. Accordingly, the Tables in Figures 9(a)-(c) are appropriate for both Figures 7 and 8.

Figure 9(a) is a Table illustrating the frame period of the speeded up video signals for n = 2, 3 or 4 when f_{V}in is 50 Hz or 60 Hz. Figure 9(b) is a Table illustrating the horizontal scanning frequency nfHin of the speeded up video signals for n = 2, 3 or 4 when fHin is f_{H}, 2f_{H} and 3f_{H}. Figure 9(c) is a Table summarizing the operating parameters and structure of frame rate multiplier for n = 2, 3 and 4. When n = 2, the size of the memory 214 is ¹/₂ of a frame, there are 2 speedup memories and the outputs must be delayed by ¹/₂ of a frame relative to one another, as in Figure 1. When n = 3, the size of the memory 214 is ²/₃ of a frame, there are 2 speedup memories in the array 218, 3 speedup memories altogether, and the outputs must be delayed by ¹/₃ of a frame period relative to one another. When n = 4, the size of the memory 214 is ³/₄ of a frame, there are 3 speedup memories in the array 218, 4 speedup memories altogether and the outputs must be delayed by ¹/₄ of a frame period relative to one another.

It can now be appreciated by those skilled in the art that the methods taught herein are generally applicable to all frame rate multipliers where the multiplication factor n > 1. A multiplication factor of n = 1.5, for example, can represent a situation where a 50 Hz frame rate input signal can advantageously be frame rate multiplied to 75 Hz to avoid flicker. However, it can also now be appreciated that hardware implementations of the methods taught herein are advantageously easier when n ≥ 2, and more particularly, when n is also an integer.

## Claims

1. A method for multiplying the frame rate of an input video signal having a line rate f_{H}in and a frame rate f_{V}in, comprising the steps of:
delaying said input video signal by a fraction of a frame period 1/f_{\/}in;
speeding up (18) said delayed video signal to a first line rate faster than f_{H}in;
speeding up (22) said input video signal to a second line rate faster than f_{H}in;
alternatingly supplying (26) lines of said speeded up input video signal and lines of said speeded up delayed video signal sequentially, one line at a time; and,
writing said sequentially supplied lines into a liquid crystal display (30) at said faster line rates,
thereby writing at least some of said lines multiple times within each said frame period.

2. The method of claim 1, comprising the steps of:
supplying a plurality of delayed input video signals; and,
speeding up each of said plurality of delayed input video signals to said first or second faster line rates; and,
sequentially supplying all of said speeded up video signals for said writing step.

3. The method of claim 1, comprising the steps of:
periodically interrupting said step of alternatingly supplying (32) to supply a number of consecutive lines of said speeded up video signal;
periodically interrupting said step of alternatingly supplying (32) to supply a number of consecutive lines of said speeded up delayed video signal; and,
alternating said steps of periodically interrupting (32) to maintain a uniform time interval between writing lines into the same line-number position on said liquid crystal display.

4. The method of claim 1, comprising the step of propagating said input video signal through memory to delay said input video signal by (n-1)/n of said frame period, where n is the multiplication factor of said frame rate multiplying.

5. The method of claim 1, comprising the steps of:
at least doubling said frame rate of said input video signal; and,
writing each of said lines multiple times to said liquid crystal display.

6. The method of claim 1, comprising the step of speeding up said delayed video signal and said input video signal to the same line rate faster than f_{H}in.

7. The method of claim 1, comprising the step of doubling the frame rate of an input video signal.

8. The method of claim 7, comprising the steps of:
periodically interrupting said step of alternatingly supplying (32) to supply a number of consecutive lines of said speeded up video signal;
periodically interrupting said step of alternatingly supplying (32) to supply a number of consecutive lines of said speeded up delayed video signal; and, alternating said steps of periodically interrupting (32) to maintain a uniform time interval between writing lines into the same line-number position on said liquid crystal display.

9. The method of claims 1 or 7, comprising the step of writing said lines to a liquid crystal on silicon display.

10. The method of claims 1 or 7, comprising the step of propagating said input video signal through a memory embedded in an integrated circuit.

11. The method of claim 7, comprising the step of speeding up said delayed video signal and said input video signal to the same line rate of 2f_{H}in.

12. The method of claim 1, further comprising the steps of:
utilizing a first memory (214) for storing said input video signal to delay said input video signal for a fraction of said frame period 1/f_{V}in;
utilizing a second memory (218) for speeding up said delayed video signal to said first line rate faster than f_{H}in;
utilizing a third memory (22) for speeding up said input video signal to said second line rate faster than f_{H}in;
utilizing a multiplexer (26) coupled for receiving both said speeded up video signals and supplying said speeded up video signals one line at a time for writing to said liquid crystal display (30), and,
utilizing a source (32) of clock signals and control signals, said source being coupled to each of said memories, to said multiplexer and to said liquid crystal display, such that successive lines supplied by said multiplexer to said liquid crystal display originate alternately from said second and third memories at said faster line rates, at least some of said supplied lines being supplied to said liquid crystal display multiple times within each said frame period.

13. The method of claim 12, wherein a capacity of said first memory (214) is (n-1)/ₙ of a frame, where n is the multiplication factor of said frame rate multiplication.

14. The method of claim 13, wherein said first memory (214) has n-1 outputs for supplying n-1 delayed output video signals (216A, 216B, 216C), where n ≥ 2.

15. The method of claim 14, comprising the steps of:
utilizing n-1 memories (218A, 218B, 218C) coupled to said first memory and to said multiplexer for speeding up said n-1 delayed output video signals to said faster line rate; and,
wherein said lines supplied by said multiplexer to said liquid crystal display originate sequentially from said third memory (22) and said n-1 memories.

16. The method of claim 12, wherein said source of clock signals and control signals provides an operating mode in which said multiplexer is controlled to:
periodically interrupt said alternatingly supplying lines to said liquid crystal display;
supply to said liquid crystal display during said periodic interruptions a number of successive lines from said second memory or a number of successive lines from said third memory; and,
alternately select said number of successive lines from said second or third memory in order to maintain a uniform time interval between writing lines into the same line-number position on said liquid crystal display.

17. The method of claim 12, wherein said first memory is formed integrally in an integrated circuit.

18. The method of claim 12, wherein said first and second memories are functionally combined into a single memory to both delay and speed up said input video signal.

19. The method of claim 12, wherein said first, second and third memories are functionally combined into a single memory to delay and speed up said delayed input video signal and to speed up said input video signal.

20. The method of claim 1, further comprising the steps of:
utilizing a first memory (14) for delaying said input video signal for 1/2 of said frame period 1/f_{V}in;
utilizing a second memory (18) for speeding up said delayed video signal (2fH DELAYED) to said first line rate faster than f_{H}in (4fH DELAYED);
utilizing a third memory (22) for speeding up said input video signal to said second line rate faster than f_{H}in (4fH REAL TIME);
utilizing a multiplexer (26) coupled for receiving both said speeded up video signals and supplying said speeded up video signals one line at a time for writing to a liquid crystal display (30), and,
utilizing a source (32) of clock signals and control signals, said source being coupled to each of said memories, to said multiplexer and to said liquid crystal display, such that successive lines supplied by said multiplexer to said liquid crystal display originate alternately from said second and third memories at said faster line rate, each of said supplied lines being supplied to said liquid crystal display twice within each said frame period.

21. The method of claim 20, wherein said first memory (14) has a maximum required data storage capacity of 1/2 of a frame.

22. The method of claim 20, wherein said source (32) of clock signals and control signals provides an operating mode in which said multiplexer (26) is controlled to:
periodically interrupt said alternatingly supplying lines to said liquid crystal display (30);
supply to said liquid crystal display during said periodic interruptions n successive lines from said second memory (18) or n successive lines from said third memory (22); and,
alternately select said n successive lines from said second (18) or third (22) memory in order to maintain a uniform time interval between writing lines into the same line-number position on said liquid crystal display (30).

23. The method of claim 20, wherein said liquid crystal display comprises liquid crystal on silicon.

24. The method of claim 20, utilizing an integrated circuit.

25. The method of claim 24, wherein said first memory is formed integrally in said integrated circuit.

26. The method of claim 20, wherein said first and second memories are functionally combined into a single memory to both delay and speed up said input video signal.

27. The method of claim 20, wherein said first (14), second (18) and third (22) memories are functionally combined into a single memory to delay and speed up said delayed input video signal and to speed up said input video signal.

28. The method of claims 14 or 20, wherein said first and second faster line rates are the same.

## Patentansprüche

1. Verfahren zum Multiplizieren der Bildwiederholungsfrequenz eines Videoeingangssignals,
das eine Zeilenfrequenz f_{H}in und eine
Bildwiederholungsfrequenz f_{V}in aufweist, die
nachfolgenden Schritte umfassend:
Verzögern des Videoeingangssignals um einen Bruchteil eines Rahmenzeitraums 1/f_{V}in;
Beschleunigen (18) des verzögerten Videosignals auf eine erste Zeilenfrequenz, die schneller als f_{H}in ist;
Beschleunigen (22) des Videoeingangssignals auf eine zweite Zeilenfrequenz, die schneller als f_{H}in ist;
abwechselndes Zuführen (26) von Zeilen des beschleunigten Videoeingangssignals und von Zeilen des beschleunigten verzögerten Videosignals sequentiell, eine Zeile nach der anderen; und
Schreiben der mit den schnelleren Zeilenfrequenzen sequentiell zugeführten Zeilen in eine Flüssigkristallanzeige (30), wodurch mindestens einige der Zeilen mehrere Male während jedes Rahmenzeitraums geschrieben werden.

2. Verfahren nach Anspruch 1, die nachfolgenden Schritte umfassend:
Zuführen einer Vielzahl von verzögerten Videoeingangssignalen; und
Beschleunigen von jeder der Vielzahl von verzögerten Videoeingangssignalen auf die erste oder zweite schnellere Zeilenfrequenz; und
sequentielles Zuführen aller beschleunigten Videosignale für den Schreibschritt.

3. Verfahren nach Anspruch 1, die nachfolgenden Schritte umfassend:
periodisches Unterbrechen des Schrittes des abwechselnden Zuführens (32), um eine Anzahl von fortlaufenden Zeilen des beschleunigten Videosignals zuzuführen;
periodisches Unterbrechen des Schrittes des abwechselnden Zuführens (32), um eine Anzahl von fortlaufenden Zeilen des beschleunigten verzögerten Videosignals zuzuführen; und
Abwechseln der Schritte des periodischen Unterbrechens (32), um ein einheitliches Zeitintervall zwischen dem Schreiben von Zeilen in dieselbe Zeilennummernposition auf der Flüssigkristallanzeige aufrechtzuerhalten.

4. Verfahren nach Anspruch 1, den Schritt des Verbreitens des Videoeingangssignals durch einen Speicher umfassend, um das Videoeingangssignal um (n-1)/n des Rahmenzeitraums zu verzögern, wobei n der Multiplikationsfaktor des Multiplizierens der Bildwiederholungsfrequenz ist.

5. Verfahren nach Anspruch 1, die nachfolgenden Schritte umfassend:
mindestens Verdoppeln der Bildwiederholungsfrequenz des Videoeingangssignals; und
mehrmaliges Schreiben von jeder der Zeilen in die Flüssigkristallanzeige.

6. Verfahren nach Anspruch 1, den Schritt des Beschleunigens des verzögerten Videosignals und des Videoeingangssignals auf dieselbe Zeilenfrequenz umfassend, die schneller als f_{H}in ist.

7. Verfahren nach Anspruch 1, den Schritt des Verdoppelns der Bildwiederholungsfrequenz eines Videoeingangssignals umfassend.

8. Verfahren nach Anspruch 7, die nachfolgenden Schritte umfassend:
periodisches Unterbrechen des Schrittes des abwechselnden Zuführens (32), um eine Anzahl von fortlaufenden Zeilen des beschleunigten Videosignals zuzuführen;
periodisches Unterbrechen des Schrittes des abwechselnden Zuführens (32), um eine Anzahl von fortlaufenden Zeilen des beschleunigten verzögerten Videosignals zuzuführen; und
Abwechseln der Schritte des periodischen Unterbrechens (32), um ein einheitliches Zeitintervall zwischen dem Schreiben von Zeilen in dieselbe Zeilennummernposition auf der Flüssigkristallanzeige aufrechtzuerhalten.

9. Verfahren nach Anspruch 1 oder 7, den Schritt des Schreibens der Zeilen in eine Flüssigkristall-auf-Silizium-Anzeige umfassend.

10. Verfahren nach Anspruch 1 oder 7, den Schritt des Verbreitens des Videoeingangssignals durch einen Speicher, der in eine integrierte Schaltung eingebettet ist, umfassend.

11. Verfahren nach Anspruch 7, den Schritt des Beschleunigens des verzögerten Videosignals und des Videoeingangssignals auf dieselbe Zeilenfrequenz von 2f_{H}in umfassend.

12. Verfahren nach Anspruch 1, ferner die nachfolgenden Schritte umfassend:
Verwenden eines ersten Speichers (214) zum Speichern des Videoeingangssignals, um das Videoeingangssignal um einen Bruchteil des Rahmenzeitraums 1/f_{V}in zu verzögern;
Verwenden eines zweiten Speichers (218) zum Beschleunigen des verzögerten Videosignals auf die erste Zeilenfrequenz, die schneller als f_{H}in ist;
Verwenden eines dritten Speichers (22) zum Beschleunigen des Videoeingangssignals auf die zweite Zeilenfrequenz, die schneller als f_{H}in ist;
Verwenden eines Multiplexers (26), der gekoppelt ist, um die beiden beschleunigten Videosignale zu empfangen und um die beschleunigten Videosignale eine Zeile nach der anderen zum Schreiben in die Flüssigkristallanzeige (30) zuzuführen, und
Verwenden einer Quelle (32) von Taktsignalen und Steuerungssignalen, wobei die Quelle mit jedem der Speicher, mit dem Multiplexer und mit der Flüssigkristallanzeige dergestalt gekoppelt ist, dass aufeinanderfolgende Zeilen, die der Flüssigkristallanzeige durch den Multiplexer zugeführt werden, abwechselnd von dem zweiten und dritten Speicher mit der schnelleren Zeilenfrequenz ausgehen, wobei mindestens einige der zugeführten Zeilen der Flüssigkristallanzeige mehrere Male während jedes Rahmenzeitraums zugeführt werden.

13. Verfahren nach Anspruch 12, wobei eine Kapazität des ersten Speichers (214) aus (n-1)/n eines Rahmens besteht, wobei n der Multiplikationsfaktor der Multiplikation der Bildwiederholungsfrequenz ist.

14. Verfahren nach Anspruch 13, wobei der erste Speicher (214) n-1 Ausgänge zum Zuführen von n-1 verzögerten Videoausgangssignalen (216A, 216B, 216C) aufweist, wobei n ≥ 2.

15. Verfahren nach Anspruch 14, die nachfolgenden Schritte umfassend:
Verwenden von n-1 Speichern (218A, 218B, 218C), die mit dem ersten Speicher und mit dem Multiplexer gekoppelt sind, um die n-1 verzögerten Videoausgangssignale auf die schnellere Zeilenfrequenz zu beschleunigen; und
wobei die Zeilen, die der Flüssigkristallanzeige durch den Multiplexer zugeführt werden, sequentiell von dem dritten Speicher (22) und den n-1 Speichern ausgehen.

16. Verfahren nach Anspruch 12, wobei die Quelle von Taktsignalen und Steuerungssignalen einen Betriebsmodus bereitstellt, in dem der Multiplexer gesteuert wird, um
periodisch das abwechselnde Zuführen von Zeilen an die Flüssigkristallanzeige zu unterbrechen;
der Flüssigkristallanzeige während der periodischen Unterbrechungen eine Anzahl von aufeinanderfolgenden Zeilen von dem zweiten Speicher oder eine Anzahl von aufeinanderfolgenden Zeilen von dem dritten Speicher zuzuführen; und
abwechselnd die Anzahl von aufeinanderfolgenden Zeilen von dem zweiten oder dritten Speicher auszuwählen, um ein einheitliches Zeitintervall zwischen dem Schreiben von Zeilen in dieselbe Zeilennummernposition auf der Flüssigkristallanzeige aufrechtzuerhalten.

17. Verfahren nach Anspruch 12, wobei der erste Speicher in einer integrierten Schaltung integriert ausgebildet ist.

18. Verfahren nach Anspruch 12, wobei der erste und zweite Speicher funktionsmäßig zu einem einzigen Speicher kombiniert werden, um das Videoeingangssignal sowohl zu verzögern als auch zu beschleunigen.

19. Verfahren nach Anspruch 12, wobei der erste, zweite und dritte Speicher funktionsmäßig zu einem einzigen Speicher kombiniert werden, um das verzögerte Videoeingangssignal zu verzögern und zu beschleunigen und um das Videoeingangssignal zu beschleunigen.

20. Verfahren nach Anspruch 1, ferner die nachfolgenden Schritte umfassend:
Verwenden eines ersten Speichers (14) zum Verzögern des Videoeingangssignals um die Hälfte des Rahmenzeitraums 1/f_{V}in;
Verwenden eines zweiten Speichers (18) zum Beschleunigen des verzögerten Videosignals (2fH VERZÖGERT) auf die erste Zeilenfrequenz, die schneller als f_{H}in ist (4fH VERZÖGERT);
Verwenden eines dritten Speichers (22) zum Beschleunigen des Videoeingangssignals auf die zweite Zeilenfrequenz, die schneller als f_{H}in ist (4fH ECHTZEIT);
Verwenden eines Multiplexers (26), der gekoppelt ist, um die beiden beschleunigten Videosignale zu empfangen und um die beschleunigten Videosignale eine Zeile nach der anderen zum Schreiben in eine Flüssigkristallanzeige (30) zuzuführen, und
Verwenden einer Quelle (32) von Taktsignalen und Steuerungssignalen, wobei die Quelle mit jedem der Speicher, mit dem Multiplexer und mit der Flüssigkristallanzeige dergestalt gekoppelt ist, dass aufeinanderfolgende Zeilen, die der Flüssigkristallanzeige durch den Multiplexer zugeführt werden, abwechselnd von dem zweiten und dritten Speicher mit der schnelleren Zeilenfrequenz ausgehen, wobei jede der zugeführten Zeilen der Flüssigkristallanzeige zweimal während jedes Rahmenzeitraums zugeführt wird.

21. Verfahren nach Anspruch 20, wobei der erste Speicher (14) eine maximal erforderliche Datenspeicherkapazität von der Hälfte eines Rahmens aufweist.

22. Verfahren nach Anspruch 20, wobei die Quelle (32) von Taktsignalen und Steuerungssignalen einen Betriebsmodus bereitstellt, in welchem der Multiplexer (26) gesteuert wird, um
periodisch das abwechselnde Zuführen von Zeilen an die Flüssigkristallanzeige (30) zu unterbrechen;
der Flüssigkristallanzeige während der periodischen Unterbrechungen n aufeinanderfolgende Zeilen von dem zweiten Speicher (18) oder n aufeinanderfolgende Zeilen von dem dritten Speicher (22) zuzuführen; und
abwechselnd die n aufeinanderfolgenden Zeilen von dem zweiten (18) oder dritten (22) Speicher auszuwählen, um ein einheitliches Zeitintervall zwischen dem Schreiben von Zeilen in dieselbe Zeilennummernposition auf der Flüssigkristallanzeige (30) aufrechtzuerhalten.

23. Verfahren nach Anspruch 20, wobei die Flüssigkristallanzeige Flüssigkristall-auf-Silizium umfasst.

24. Verfahren nach Anspruch 20, eine integrierte Schaltung verwendend.

25. Verfahren nach Anspruch 24, wobei der erste Speicher in der integrierten Schaltung integriert ausgebildet ist.

26. Verfahren nach Anspruch 20, wobei der erste und zweite Speicher funktionsmäßig zu einem einzigen Speicher kombiniert werden, um das Videoeingangssignal sowohl zu verzögern als auch zu beschleunigen.

27. Verfahren nach Anspruch 20, wobei der erste (14), zweite (18) und dritte (22) Speicher funktionsmäßig zu einem einzigen Speicher kombiniert werden, um das verzögerte Videoeingangssignal zu verzögern und zu beschleunigen und um das Videoeingangssignal zu beschleunigen.

28. Verfahren nach Anspruch 14 oder 20, wobei die erste und zweite schnellere Zeilenfrequenz gleich sind.

## Revendications

1. Procédé permettant de multiplier la fréquence de trame d'un signal vidéo d'entrée comportant une fréquence de ligne f_{H}in et une fréquence de trame f_{V}in, comprenant les étapes consistant à :
retarder ledit signal vidéo d'entrée d'une fraction d'une période de trame 1/_{fV}in ;
accélérer (18) ledit signal vidéo retardé à une première fréquence de ligne plus rapide que f_{H}in ;
accélérer (22) ledit signal vidéo d'entrée à une seconde fréquence de ligne plus rapide que f_{H}in ;
fournir par alternance (26) des lignes dudit signal vidéo d'entrée accéléré et des lignes dudit signal vidéo retardé accéléré de manière séquentielle, une ligne à la fois ; et
écrire lesdites lignes fournies de manière séquentielle sur un afficheur (30) à cristaux liquides auxdites fréquences de ligne plus rapides,
écrire ainsi au moins certaines desdites lignes plusieurs fois dans chaque période de trame.

2. Procédé selon la revendication 1, comprenant les étapes consistant à :
fournir une pluralité de signaux vidéo d'entrée retardés ; et,
accélérer chacun de la dite pluralité de signaux vidéo d'entrée retardés auxdites première ou seconde fréquences de ligne plus rapides ; et,
fournir de manière séquentielle tous lesdits signaux vidéo accélérés pour ladite étape d'écriture.

3. Procédé selon la revendication 1, comprenant les étapes consistant à :
interrompe périodiquement ladite étape (32) de fourniture par alternance pour fournir un certain nombre de lignes consécutives dudit signal vidéo accéléré ;
interrompre périodiquement ladite étape (32) de fourniture par alternance pour fournir un certain nombre de lignes consécutives dudit signal vidéo retardé accéléré ; et,
alterner lesdites étapes (32) d'interruption périodique pour maintenir un intervalle de temps uniforme entre des lignes d'écriture dans la même position de numéro de ligne sur ledit afficheur à cristaux liquides.

4. Procédé selon la revendication 1, comprenant l'étape consistant à propager ledit signal vidéo d'entrée dans une mémoire pour retarder ledit signal vidéo d'entrée de (n-1)/n de ladite période de trame, où n est le facteur de multiplication de ladite multiplication de fréquence de trame.

5. Procédé selon la revendication 1, comprenant les étapes consistant à :
doubler au moins ladite fréquence de trame dudit signal vidéo d'entrée ; et,
écrire chacune desdites lignes plusieurs fois sur ledit afficheur à cristaux liquides.

6. Procédé selon la revendication 1, comprenant l'étape consistant à accélérer ledit signal vidéo retardé et ledit signal vidéo d'entrée à la même fréquence de ligne plus rapide que f_{H}in.

7. Procédé selon la revendication 1, comprenant l'étape consistant à doubler la fréquence de trame d'un signal vidéo d'entrée.

8. Procédé selon la revendication 7, comprenant les étapes consistant à :
interrompre périodiquement ladite étape (32) de fourniture par alternance pour fournir un certain nombre de lignes consécutives dudit signal vidéo accéléré ;
interrompre périodiquement ladite étape (32) de fourniture par alternance pour fournir un certain nombre de lignes consécutives dudit signal vidéo retardé accéléré ; et,
alterner lesdites étapes (32) d'interruption périodique pour maintenir un intervalle temporel uniforme entre des lignes d'écriture dans la même position de numéro de ligne sur ledit afficheur à cristaux liquides.

9. Procédé selon les revendications 1 ou 7, comprenant l'étape consistant à écrire lesdites lignes sur un afficheur à cristaux liquides sur silicium.

10. Procédé selon les revendications 1 ou 7, comprenant l'étape consistant à propager ledit signal vidéo d'entrée dans une mémoire embarquée dans un circuit intégré.

11. Procédé selon la revendication 7, comprenant l'étape consistant à accélérer ledit signal vidéo retardé et ledit signal vidéo d'entrée à la même fréquence de ligne de 2f_{H}in.

12. Procédé selon la revendication 1, comprenant en outre les étapes consistant à :
utiliser une première mémoire (214) pour stocker ledit signal vidéo d'entrée pour retarder ledit signal vidéo d'entrée d'une fraction de ladite période de trame 1/f_{V}in ;
utiliser une deuxième mémoire (218) pour accélérer ledit signal vidéo retardé à ladite première fréquence de ligne plus rapide que f_{H}in ;
utiliser une troisième mémoire (22) pour accélérer ledit signal vidéo d'entrée à ladite seconde fréquence de ligne plus rapide que f_{H}in ;
utiliser un multiplexeur (26) couplé pour recevoir les deux dits signaux vidéo accélérés et fournir lesdits signaux vidéo accélérés une ligne à la fois pour une écriture sur ledit afficheur à cristaux liquides (30), et,
utiliser une source (32) de signaux d'horloge et de signaux de commande, ladite source étant couplée à chacune desdites mémoires, audit multiplexeur et audit afficheur à cristaux liquides, de sorte que les lignes successives fournies par ledit multiplexeur audit afficheur à cristaux liquides proviennent par alternance desdites deuxième et troisième mémoires auxdites fréquences de ligne plus rapides, au moins certaines desdites lignes fournies étant fournies audit afficheur à cristaux liquides plusieurs fois dans chaque période de trame.

13. Procédé selon la revendication 12, dans lequel une capacité de ladite première mémoire (214) est (n-1)/n d'une trame, où n est le facteur de multiplication de ladite multiplication de fréquence de trame.

14. Procédé selon la revendication 13, dans lequel ladite première mémoire (214) possède n-1 sorties pour fournir n-1 signaux vidéo de sortie retardés (216A, 216B, 216C), où n ≥ 2.

15. Procédé selon la revendication 14, comprenant les étapes consistant à :
utiliser n-1 mémoires (218A, 218B, 218C) couplées à ladite première mémoire et audit multiplexeur pour accélérer lesdits n-1 signaux vidéo de sortie retardés à ladite fréquence de ligne plus rapide ; et,
dans lequel lesdites lignes fournies par ledit multiplexeur audit afficheur à cristaux liquides proviennent de manière séquentielle de ladite troisième mémoire (22) et desdites n-1 mémoires.

16. Procédé selon la revendication 12, dans lequel ladite source de signaux d'horloge et de signaux de commande fournit un mode de fonctionnement
dans lequel ledit multiplexeur est commandé pour :
interrompre périodiquement ladite fourniture de lignes par alternance audit afficheur à cristaux liquides ;
fournir audit afficheur à cristaux liquides pendant lesdites interruptions périodiques un certain nombre de lignes successives provenant de la dite deuxième mémoire ou un certain nombre de lignes successives provenant de ladite troisième mémoire ; et,
sélectionner par alternance ledit certain nombre de lignes successives provenant de ladite deuxième ou troisième mémoire afin de maintenir un intervalle de temps uniforme entre des lignes d'écriture dans la même position de numéro de ligne sur ledit afficheur à cristaux liquides.

17. Procédé selon la revendication 12, dans lequel ladite première mémoire fait partie intégrante d'un circuit intégré.

18. Procédé selon la revendication 12, dans lequel lesdites première et deuxième mémoires sont combinées de manière fonctionnelle en une mémoire unique permettant à la fois de retarder et d'accélérer ledit signal vidéo d'entrée.

19. Procédé selon la revendication 12, dans lequel lesdites première, deuxième et troisième mémoires sont combinées de manière fonctionnelle en une mémoire unique pour retarder et accélérer ledit signal vidéo d'entrée retardé et accélérer ledit signal vidéo d'entrée.

20. Procédé selon la revendication 1, comprenant en outre les étapes consistant à :
utiliser une première mémoire (14) pour retarder ledit signal vidéo d'entrée de 1/2 de ladite période de trame 1/f_{V}in ;
utiliser une deuxième mémoire (18) pour accélérer ledit signal vidéo retardé (2fH RETARDE) à ladite première fréquence de ligne plus rapide que f_{H}in (4fH RETARDE) ;
utiliser une troisième mémoire (22) pour accélérer ledit signal vidéo d'entrée à ladite seconde fréquence de ligne plus rapide que f_{H}in (4fH TEMPS REEL) ;
utiliser un multiplexeur (26) couplé pour recevoir à la fois lesdits signaux vidéo accélérés et fournir lesdits signaux vidéo accélérés une ligne à la fois pour une écriture sur un afficheur (30) à cristaux liquides, et,
utiliser une source (32) de signaux d'horloge et de signaux de commande, ladite source étant couplée à chacune desdites mémoires, audit multiplexeur et audit afficheur à cristaux liquides, de sorte que les lignes successives fournies par ledit multiplexeur audit afficheur à cristaux liquides proviennent par alternance desdites deuxième et troisième mémoires à ladite fréquence de ligne plus rapide, chacune desdites lignes fournies étant fournie audit afficheur à cristaux liquides deux fois dans chaque période de trame.

21. Procédé selon la revendication 20, dans lequel ladite première mémoire (14) possède une capacité de stockage de données requise maximale de ½ d'une trame.

22. Procédé selon la revendication 20, dans lequel ladite source (32) de signaux d'horloge et de signaux de commande fournit un mode de fonctionnement
dans lequel ledit multiplexeur (26) est commandé pour :
interrompre périodiquement ladite fourniture par alternance de lignes audit afficheur (30) à cristaux liquides ;
fournir audit afficheur à cristaux liquides lors desdites interruptions périodiques n lignes successives provenant de ladite deuxième mémoire (18) ou n lignes successives provenant de ladite troisième mémoire (22) ; et,
sélectionner par alternance lesdites n lignes successives provenant de ladite deuxième (18) ou troisième (22) mémoire afin de maintenir un intervalle de temps uniforme entre des lignes d'écriture dans la même position de numéro de ligne sur ledit afficheur (30) à cristaux liquides.

23. Procédé selon la revendication 20, dans lequel ledit afficheur à cristaux liquides comprend des cristaux liquides sur silicium.

24. Procédé selon la revendication 20, utilisant un circuit intégré.

25. Procédé selon la revendication 24, dans lequel ladite première mémoire fait partie intégrante dudit circuit intégré.

26. Procédé selon la revendication 20, dans lequel lesdites première et deuxième mémoires sont combinées de manière fonctionnelle en une mémoire unique permettant à la fois de retarder et d'accélérer ledit signal vidéo d'entrée.

27. Procédé selon la revendication 20, dans lequel lesdites première (14), deuxième (18) et troisième (22) mémoires sont combinées de manière fonctionnelle en une mémoire unique pour retarder et accélérer ledit signal vidéo d'entrée retardé et accélérer ledit signal vidéo d'entrée.

28. Procédé selon les revendications 14 ou 20, dans lequel lesdites première et deuxième fréquences de ligne plus rapides sont identiques.
